# EUROPÄISCHE PATENTSCHRIFT

(11) **EP 1 360 982 B1**
(45) Veröffentlichungstag und Bekanntmachung des Hinweises auf die Patenterteilung: **16.03.2011**
(21) Anmeldenummer: 03008132.7
(22) Anmeldetag: 08.04.2003
(51) Int. Cl.: B01D 29/48

(54) **Verfahren zum Herstellen von konischen Filterelementen**
Method of manufacturing a conical filter element
Procédé de fabrication d' un élément filtrant conique

(30) Priorität: 07.05.2002 DE 10220273
(43) Veröffentlichungstag der Anmeldung: 12.11.2003
(73) Patentinhaber: Hydac Process Technology GmbH, 66538 Neunkirchen (DE)
(72) Erfinder: Wnuk, Ralf, Dr., 66450 Bexbach (DE); Winter, Martin, 66620 Nonnweiler (DE); Lang, Norbert, 66440 Blieskastel (DE)
(74) Vertreter: Bartels & Partner

(56) Entgegenhaltungen:
- DE-A- 2 512 781
- DE-C- 19 702 908
- US-A- 4 637 879

## Beschreibung

Die Erfindung betrifft ein Verfahren zum Herstellen von konischen Filterelementen, insbesondere Spaltsiebrohrfilterelementen, deren jeweilige Stützstruktur aus einer Vielzahl von Stützstäben gebildet werden, um'die unter Freilassen von durch ein Fluid passierbaren Spalten mindestens ein Drahtprofil in einzelnen Windungen gewickelt und das zumindest teilweise mit den Stützstäben fest verbunden wird, wobei das jeweilige Drahtprofil von einem Siebgitter umgeben wird, das an dem Drahtprofil zumindest teilweise anliegend dem konischen Verlauf des Filterelementes im selben Maße nachfolgt, das endseitig mit Endteilen versehen wird.

Durch die DE 197 11 589 A1 ist ein Filterelement, insbesondere Spaltsiebrohrfilterelement bekannt, mit Stützstäben, um die unter Freilassen von durch ein Fluid passierbaren Spalten mindestens ein Drahtprofil in einzelnen Windungen gewickelt ist, das zumindest teilweise mit den Stützstäben verschweißt ist. Dahingehende Filterelemente sind sowohl in zylindrischer wie in konischer Form auf dem Markt frei erhältlich, wobei die genannten Filterelemente unter anderem in sogenannten Rückspülfiltervorrichtungen eingesetzt sind, die ein Gehäuse mit einem Filtereinlaß und einem -auslaß für das zu filtrierende Fluid aufweisen, wobei die Filterelemente für eine Filtration von innen nach außen oder für einen Rückspülvorgang nacheinander von außen nach innen durchströmbar sind. Für spezielle Einsatzgebiete können für eine Filtration und Rückspülung die dahingehenden Fluidströme auch umgekehrt vorgesehen sein.

Dadurch, daß bei der bekannten Lösung der jeweilige Stützstab mit seinem einem Ende auf die Längsachse des Filterelementes zugeneigt ist, wobei die Windungen des jeweiligen Drahtprofils dabei sich im Durchmesser in Richtung der geneigten Enden der Stützstäbe verringern, ist ein konischer Aufbau des jeweiligen Filterelementes erreicht, wobei die Fluideintrittsfläche im Element sehr groß ist, und wobei sich der Abstand zwischen den Filterelementen, sofern sie in der beschriebenen Rückspülfiltervorrichtung eingesetzt sind, sich zur Auslaßseite des Gehäuses hin vergrößert, mit der Folge, daß der Flüssigkeit beim Austritt aus dem Innenraum des jeweiligen Filterelementes ein kleinerer Widerstand als beim Einsatz zylindrischer Elemente entgegengesetzt wird, und sich mithin die Druckdifferenz des Gesamtfilters verringert, was von der Energiebilanz her günstig ist. Des weiteren wird bei der bekannten Lösung durch den konischen Aufbau des Filterelementes ein konstanter Flüssigkeitsstrom beim Rückspülen erreicht, mit einer im wesentlichen konstanten Geschwindigkeit, was die Abreinigung der Filterelemente begünstigt und im Betrieb der Rückspülfiltervorrichtung schonend ist.

Zur Herstellung des bekannten Spaltsiebrohrfilterelementes wird die Stützgitterstruktur zusammen mit dem aufgezogenen Drahtprofil außenumfangseitig von einem in entsprechendem Maße konisch nachfolgenden rohrförmigen Siebgitter umgeben. Das dahingehende Siebgitter läßt sich streifenartig um das Drahtprofil herumwickeln und über Schweißnähte lassen sich die einzelnen Wicklungen des Siebgitters miteinander verbinden als auch die Verbindung mit dem Drahtprofil selbst, herstellen. Das dahingehende Herstellverfahren ist teuer und aufwendig und darüber hinaus kommt das Siebgitter nicht immer in unmittelbare Anlage mit dem Drahtprofil, mit der Folge, daß es zu, die Filtrationsleistung nachteilig beeinflußenden Vorgängen kommt und insgesamt die Steifigkeit des gesamten Filters nachteilig beeinflußt ist.

Durch die DE-A-2 512 781 ist bei einem gattungsgemäßen Filterelement bekannt, ein konisches Filtergewebe als Siebgitter in der Art eines vorgefertigten Strumpfes auf den Stützkörper, bestehend aus Stützstäben und mindestens einem Stützdrahtprofil, aufzuziehen, wobei die Stützstäbe des Stützkörpers gleichfalls leicht konisch angeordnet sind, um dergestalt das Siebgewebe möglichst faltenlos auf den Stützkörper aufzubringen.

Ausgehend von diesem Stand der Technik liegt der Erfindung die Aufgabe zugrunde, ein Filterelement der eingangs genannten Art herstelltechnisch dahingehend weiter zu verbessern, daß es einfach und kostengünstig zu realisieren ist und zu verbesserten Filtrationsergebnissen führt. Eine dahingehende Aufgabe löst ein Herstellverfahren mit den Merkmalen des Patentanspruches 1 in seiner Gesamtheit.

Dadurch, daß gemäß dem kennzeichnenden Teil des Patentanspruches 1 das konische Siebgitter als einstückiges Aufziehteil auf die Stützstruktur mit Drahtprofil ausgebildet wird, daß das Aufziehteil länger ausgebildet wird als die Stützstruktur, daß das Siebgitter (22) auf die Stützstruktur aufgezogen wird, daß danach zumindest ein Überstand des Siebgitters paßgenau abgetrennt wird und daß das Siebgitter (22) auf der Stützstruktur mit dem jeweiligen Endteil des Filterelementes verbunden wird, läßt sich das Siebgitter vor dem eigentlichen Verbindungsvorgang mit dem sonstigen Filterelement einstückig herstellen und anschließend in der Art eines Strumpfes auf die Stützstruktur mit Drahtprofil aufziehen. Die im wesentlichen gleich ausgestalteten Konizitäten zwischen der Innenumfangseite des Siebgitters und der Außenumfangseite des Drahtprofils, das auf der Stützstruktur aufgebracht ist, läßt sich ein paßgenauer im wesentlichen spielfreier Aufziehvorgang erreichen, so daß sich das Siebgitter unmittelbar an die Außenwindungen des Drahtprofils anlegt. Nach Erhalt dieses paßgenauen Sitzes, lassen sich dann die überstehenden Enden (Überstand) des Siebgitters abtrennen und mit dem jeweiligen Endteil des Filterelementes zusammen mit der Stützstruktur und dem Drahtprofil verbinden.

Aufgrund des paßgenauen Sitzes ist die Gesamtstruktur sehr steif und das Filtersieb selbst ist im wesentlichen eigentragfähig und erhöht dergestalt die Gesamtstabilität des Filterelementes. Insbesondere kann es auch bei einer Filtrationsrichtung von innen nach außen durch das Filterelement nicht zu Ausbeulvorgängen kommen, bei denen das konische Siebgitter von der Drahtprofilstruktur abgehoben wird; letzteres wird bereits durch die Eigenstabilität des Siebgitters wirksam vermieden.

Bei einer bevorzugten Ausführungsform des erfindungsgemäßen Verfahrens wird dabei das Siebgitter aus einem Zuschnitt an biegsamen Filtermaterial erhalten, das zu einem konischen Rohr gebogen entlang seiner beiden einander zugewandten Längsrändern, insbesondere über eine Schweißnaht miteinander fest verbunden wird. Die dahingehende Schweißnaht läßt sich über eine Rollnahtschweißung oder dergleichen erhalten, und verbindet überstandsfrei die beiden freien Längsränder des Siebgitters miteinander unter Bildung des konischen Siebrohres.

Bei einer weiteren bevorzugten Ausführungsform des erfindungsgemäßen Verfahrens, wird das jeweilige Endteil des Filterelementes aus einer Endkappe gebildet, die an ihrem einen freien Ende mit einem Aufnahmeteil versehen wird, daß nach Kürzen des Siebgitters dieses an seinem freien Ende übergreift und über einen Eindrück- oder Bördelvorgang wird für eine feste Verbindung zwischen Endkappe und Siebgitter das Aufnahmeteil gegen den Außenumfang des Siebgitters im Bereich seines freien Endes verpresst. Über den Eindrück- oder Bördelvorgang läßt sich in kostengünstiger und fertigungstechnisch sauberer Art und Weise die Verbindung der Endkappen mit dem Siebgitter herstellen.

Vorzugsweise ist dabei des weiteren vorgesehen, die freien Enden der Stützstäbe unmittelbar mit dem jeweiligen Endteil, vorzugsweise über ein Schweißverfahren, fest miteinander zu verbinden, oder zumindest ein Teil der freien Enden wird auf einer Seite der Stützstäbe in einem gemeinsamen Befestigungsteil aufgenommen, über das die Verbindung mit dem zuordenbaren Endteil des Filterelementes hergestellt ist.

Bei einer weiteren besonders bevorzugten Ausführungsform des erfindungsgemäßen Verfahrens wird außenumfangseitig um das Siebgitter herum ein Stützteil, insbesondere in Form eines spiralförmigen Stützdrahtes geführt, wobei das Stützteil mit seinen beiden freien Enden am jeweiligen Endteil abgestützt wird. Über das dahingehende Stützteil, insbesondere in Form eines Stützdrahtes läßt sich die Beulsteifigkeit bei einer Filtrationsrichtung von innen nach außen durch das Filterelement weiter erhöhen und dergestalt das Siebgitter an dem jeweiligen Drahtprofil definiert festlegen. Vorzugsweise ist dabei vorgesehen, daß der Stützdraht gleichsinnig zur Spaltrohrsteigung gewickelt wird. Vorzugsweise werden die Komponenten des Filterelementes aus Edelstahlmaterialien gebildet, insbesondere auch das Stützgitter, so daß die Gesamtkonstruktion wenig korrosionsanfällig ist und die Abreinigung, insbesondere über Rückspülfiltervorgänge, ist durch die genannte Materialauswahl gleichfalls erleichtert.

Im folgenden wird das erfindungsgemäße Verfahren anhand einer Ausführungsform nach der Zeichnung näher erläutert. Dabei zeigen in prinzipieller und nicht maßstäblicher Darstellung die
- Fig. 1: teilweise im Längsschnitt, teilweise in Ansicht das komplementierte Filterelement, wobei aufgrund der gewählten Baulänge der Mittenbereich des Filterelementes der Einfachheit halber nicht dargestellt ist;
- Fig. 2: im Maßstab 2 : 1 einen vergrößerten Ausschnitt des mit X bezeichneten Zeichenausschnittes nach der Fig. 1;
- Fig. 3: teilweise in Ansicht, teilweise im Längsschnitt das strumpfartig aufgezogene Siebgitter auf die Grundstruktur bestehend aus Stützstruktur mit Stützstäben und Windungen an Drahtprofil.

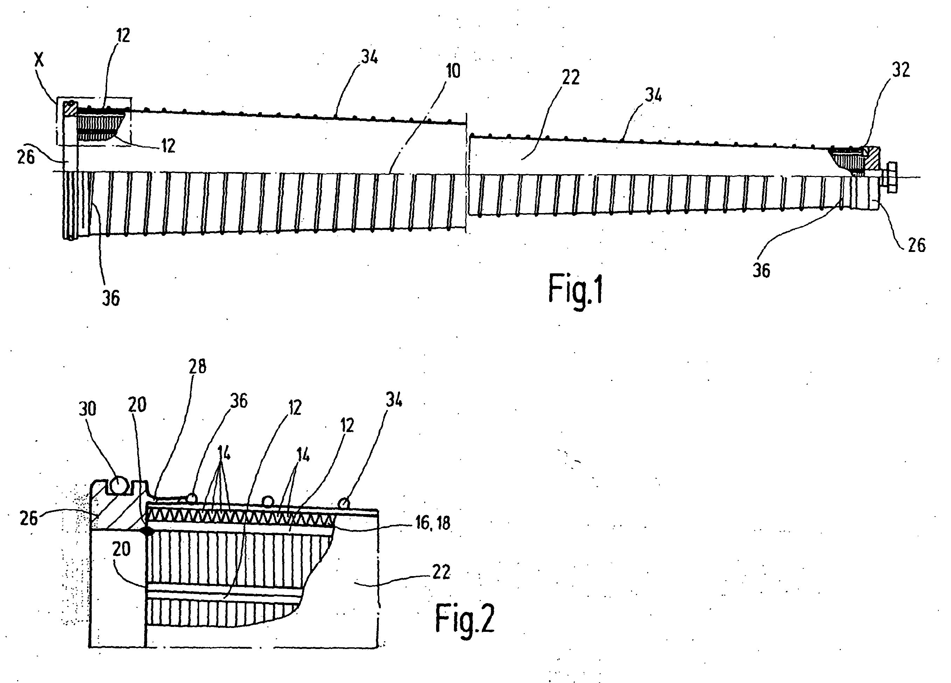

Das in der Fig. 1 in Seitendarstellung gezeigte Spaltsiebrohrfilterelement weist in Richtung seiner Längsachse 10 verlaufende einzelne Stützstäbe 12 auf, die mehrfach und diametral zur Längsachse 10 einander gegenüberliegend entlang eines vorgebbaren Außenumfanges unter Beibehalten von Abständen zueinander angeordnet sind. Unter Freilassen von durch ein Fluid (Hydraulikmedium) passierbaren Spalten 14 (vgl. Fig. 2) ist ein Drahtprofil 16 in einzelnen Windungen 18 gewickelt, wobei im Bereich einer jeden Berührstelle des Drahtprofils 16 mit einem zuordenbaren Stützstab 12 ein Schweißpunkt vorgesehen sein kann. Die für den freien Fluiddurchtritt vorgesehene Spaltgröße, also der Abstand zwischen zwei Spalten 14 ist insbesondere in der Vergrößerung nach der Fig. 2 im Querschnitt von Einzeldreiecken prinzipiell dargestellt. Die Vergrößerung der Spaltweite nach außen hin hat den Vorteil, daß eine Art Drallführung gebildet ist, die insbesondere beim Filtrieren das Abspülen der Verunreinigungen aus den Spaltabständen erleichtert.

Wie des weiteren die Fig. 1 zeigt, ist der jeweilige Stützstab 12 mit seinen beiden freien Enden 20 (vgl. Fig. 2) derart auf die Längsachse 10 zugeneigt, daß ein insgesamt konisch zulaufendes Filterelement gebildet wird, wobei die Windungen 18 des Drahtprofils 16 dabei sich im Durchmesser in Richtung der zusehends geneigten Enden 22 der Stützstäbe 12 verringern. Anstelle eines einzigen Drahtprofils 16 wie in den Figuren dargestellt, können gegebenenfalls auch mehrere, verschieden hintereinander angeordnete Drahtprofile 16 oder übereinander angeordnete und aufgewickelte Drahtprofile 16 (nicht dargestellt) eingesetzt werden, sofern dies für die angegebene Filtrationsaufgabe notwendig ist. Die in Richtung der Längsachse 10 gemessene Länge des Spaltsiebrohrfilterelementes ist dabei ca. 11 mal größer als der größte vorhandene Eintrittsquerschnitt für das Fluid, der sich in Blickrichtung auf die Fig. 1 gesehen, am linken Ende des Filterelementes ergibt.

Die Stützstäbe 12 und das Drahtprofil 16 bestehen aus Edelstahl, wobei die Stützstäbe 12 im Querschnitt quadratisch und das Drahtprofil 16 dreieckförmig ist. Die auszuwählenden Spaltweiten sind an die Größe der abzufiltrierenden Festteile aus dem Fluid, insbesondere in Form von Hydrauliköl anzupassen, wobei das filtrierte Fluid frei durch die Spalten 14 tritt und die abfiltrierten Festteile oder Schmutzteile von den Windungen 18 des Drahtprofils 16 zurückgehalten, innerhalb des Filterelementes verbleiben oder sich partiell in den Spalten 14 festsetzen, mit der Folge, daß mit zunehmender Einsatzdauer des Spaltsiebrohrfilterelementes, dieses sich immer mehr zusetzt und für das Durchführen einer Filtration nicht mehr eingesetzt werden kann. In einem dahingehenden Fall ist dann in umgekehrter Fluiddurchtrittsrichtung das Filterelement durch Rückspülen abzureinigen. Nach dem Abreinigen kann dann das Filterelement wieder für Filtrationsvorgänge in Betrieb genommen werden. Insbesondere lassen sich die genannten Filterelemente in Gesamtfiltrationsvorrichtungen einsetzen, wie sie beispielhaft in der Fig. 2 nebst zugehörigen Textteilen in der DE 197 11 589 A1 bereits beschrieben sind.

Zum Herstellen des in Fig. 1 gezeigten konischen Filterelementes wird also zunächst die Stützstruktur aus einer Vielzahl der genannten Stützstäbe 12 gebildet, um die dann unter Freilassen von durch ein Fluid passierbaren Spalten 14 das jeweilige Drahtprofil 16 in einzelnen Windungen gewickelt wird. Anschließend wird das jeweilige Drahtprofil 16, beispielsweise über Schweißpunkte, zumindest teilweise mit den Stützstäben 12 der Stützstruktur fest verbunden. Das jeweilige Drahtprofil 16 wird von einem Siebgitter 22 umgeben, das in den Figuren als konisch durchgehendes Element angegeben ist. Faktisch verfügt jedoch das Siebgitter 22 über eine Siebgitterstruktur (nicht dargestellt) in der Art eines Maschengewebes, mit vorgebbaren Durchtrittsquerschnitten. Mithin kann das Fluid ohne weiteres das Siebgitter 22 durchdringen und nach Vorgabe der Maschenweite lassen sich Verschmutzungsteile vorgebbarer Größe abhalten. Das Siebgitter 22 liegt zumindest teilweise an dem Außenumfang des Drahtprofils 16 an und folgt im übrigen dem konischen Verlauf des Filterelementes im selben Maße, insbesondere in dem genannten Längen-Durchmesser-Verhältnis 1 : 11.

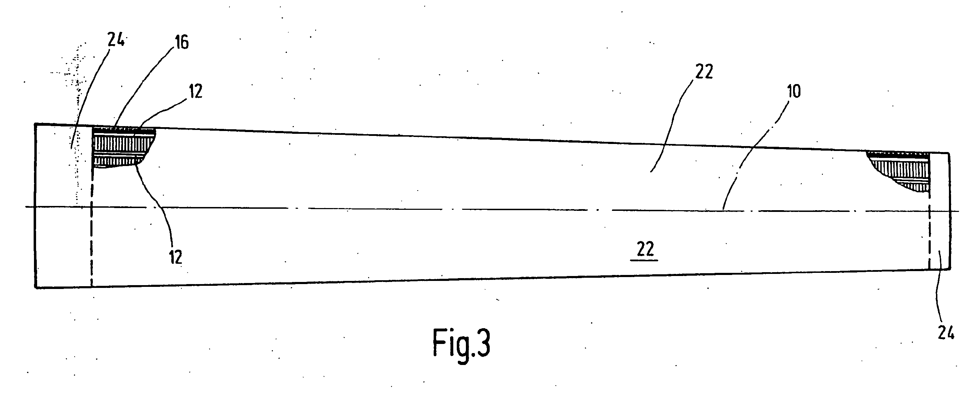

Wie insbesondere die Fig. 2 zeigt, ist das konische Siebgitter 22 als einstükkiges Aufziehteil in der Art eines Strumpfes für das Aufziehen auf die Stützstruktur mit Stützstäben 12 und Drahtprofil 16 ausgebildet. Insbesondere ist das Aufziehteil, wie dies die Darstellung nach der Fig. 3 verdeutlicht, länger ausgebildet als die Stützstruktur mit den Stützstäben 12. Das Längenübermaß ist derart gewählt, daß sich die Stützstäbe 12 mit Drahtprofil 16 ohne weiteres in das Innere des Siebgitters 22 einführen lassen und die genannten Baukomponenten werden so lange innerhalb des Siebgitters 22 in Blickrichtung auf die Fig. 3 gesehen von links nach rechts verschoben, bis eine packende Anlage zwischen Stützstäben 12 mit Drahtprofil 16 und der Innenumfangseite des Siebgitters 22 erreicht ist. Die vorstehenden Ausführungen machen deutlich, daß es dergestalt zu einer nahezu spielfreien Anlage zwischen Siebgitter 22 und der Außenumfangseite der jeweiligen Drahtprofilwicklung 16 kommt. In Abhängigkeit von den vorgegebenen Toleranzen kann das Siebgitter 22 jedenfalls dergestalt eine Überstandslänge aufweisen, daß trotz Aufnahme der Stützstäbe 12 mit Drahtprofil 16 beidseitig ein Überstand am Siebgittermantel verbleibt. Sobald das Siebgitter paßgenau auf den Windungen 18 des Drahtprofils 16 aufsitzt, werden die genannten Überstände 24 an beiden Enden des Siebgitters 22 sauber abgeschnitten oder sonstig abgetrennt. Dergestalt lassen sich dann die Enden des Siebgitters 22 mit dem jeweiligen Endteil 26 des Filterelementes fest verbinden.

Das Siebgitter 22 läßt sich am besten aus einem ebenen Zuschnitt an biegsamen Filtermaterial erhalten (nicht dargestellt), das zu einem konischen Rohr gebogen entlang seiner beiden einander zugewandten Längsränder (nicht dargestellt), insbesondere über eine Schweißnaht, miteinander fest verbunden wird. Die dahingehende Schweißnaht kann, beispielsweise über eine Rollnahtschweißung, erhalten werden.

Wie sich des weiteren aus der Darstellung nach den Fig. 1 und 2 ergibt, ist das jeweilige Endteil 26 des Filterelementes aus einer Endkappe gebildet, die an ihrem einen freien Ende mit einem Aufnahmeteil 28 versehen wird, das nach Kürzen des Siebgitters 22 um die Überstände 24, dieses an seinem jeweiligen freien Ende übergreift, und über einen Eindrück- oder Bördelvorgang wird für eine feste Verbindung zwischen Endteil 26 und Siebgitter 22 das Aufnahmeteil 28 gegen den Außenumfang des Siebgitters 22 im Bereich seines freien Endes verpresst. Anstelle der dahingehenden Verbindungsmöglichkeit, besteht dem Grunde nach auch hier das Herstellen einer Verbindungsmöglichkeit über ein übliches Schweißverfahren. An der in Blickrichtung auf die Fig. 1 gesehen linken Endkappe 26 ist außenumfangseitig ein O-Ring 30 angeordnet, der dem späteren Einbau des Filterelementes in eine Gesamtfiltervorrichtung (nicht dargestellt) dient.

Die freien Enden der Stützstäbe 12 sind entweder wie in Fig. 2 dargestellt unmittelbar mit dem jeweiligen Endteil 26 über eine Schweißnaht mit diesem fest verbunden, oder wie am gegenüberliegenden Ende gemäß Darstellung nach der Fig. 1, an ein ringförmiges Befestigungsteil 32 angeschweißt, das dann mit der zugeordneten Endkappe 26 entsprechend verbunden ist.

Außenumfangseitig um das Siebgitter 22 herum, kann ein Stützteil 34 insbesondere in Form eines spiralförmigen Stützdrahtes, geführt sein, das mit seinen beiden freien Enden 36 sich am jeweiligen Endteil 26 abstützt. Dabei ist vorgesehen, daß das Stützteil 34 in Form des Stützdrahtes gleichsinnig zur Spaltrohrsteigung gewickelt wird.

Das erfindungsgemäße Filterelement und sein Herstellverfahren läßt sich derart anpassen, daß in der Art eines modularen Aufbausystemes für vorgebbare Baugrößen ein Baukastensystem an Einzelkomponenten zur Verfügung steht, das sich für das jeweilige Filterelement entsprechend komplementieren läßt. Im übrigen ist mit dem erfindungsgemäßen Herstellverfahren ein hochsteifes Gesamtsystem für ein Filterelement erreichbar, was einen lang andauernden störungsfreien Betrieb erlaubt, bei gleichzeitiger Senkung der Herstell- und Wartungskosten.

## Patentansprüche

1. Verfahren zum Herstellen von konischen Filterelementen, insbesondere Spattsiebrohrfitteretementen, deren jeweilige Stützstruktur aus einer Vielzahl von Stützstäben (12) gebildet werden, um die unter Freilassen von durch ein Fluid passierbaren Spalten (14) mindestens ein Drahtprofil (16) in einzelnen Windungen gewickelt und das zumindest teilweise mit den Stützstäben (12) fest verbunden wird, wobei das jeweilige Drahtprofil (16) von einem Siebgitter (22) umgeben wird, das an dem Drahtprofil (16) zumindest teilweise anliegend, dem konischen Verlauf des Filterelementes im selben Maße nachfolgt das endseitig mit Endteilen (26) versehen wird, **dadurch gekennzeichnet, daß** das konische Siebgitter (22) als einstückiges Aufziehteil auf die Stützstruktur mit Drahtprofil (16) ausgebildet wird, daß das Aufziehteil länger ausgebildet wird als die Stützstruktur, daß das Siebgitter (22) auf die Stützstruktur aufgegen wird, daß danach zumindest ein Überstand (24) des Siebgitters (22) paßgenau abgetrennt wird daβ das Siebgitters (22) auf der Stützstruktur und mit dem jeweiligen Endteil (26) des Filterelementes verbunden wird.

2. Verfahren zum Herstellen eines Filterelementes nach Anspruch 1, **dadurch gekennzeichnet, daß** das Siebgitter (22) aus einem Zuschnitt an biegsamen Filtermaterial erhalten wird, das zu einem konischen Rohr gebogenen entlang seiner beiden einander zugewandten Längsrändern, insbesondere über eine Schweißnaht, miteinander fest verbunden wird.

3. Verfahren nach Anspruch 1 oder 2, **dadurch gekennzeichnet, daß** das jeweilige Endteil (26) des Filterelementes aus einer Endkappe gebildet wird, die an ihrem einen freien Ende mit einem Aufnahmeteil (28) versehen wird, das nach Kürzen des Siebgitters (22) dieses an seinem freien Ende übergreift und über einen Eindrück- oder Bördelvorgang wird für eine feste Verbindung zwischen Endkappe und Siebgitter (22) das Aufnahmeteil (28) gegen den Außenumfang des Siebgitters (22) im Bereich seines freien Endes verpresst.

4. Verfahren nach einem der Ansprüche 1 bis 3, **dadurch gekennzeichnet, daß** die freien Enden der Stützstäbe (12) unmittelbar mit dem jeweiligen Endteil (26), vorzugsweise über ein Schweißverfahren, fest miteinander verbunden werden, oder daß zumindest ein Teil der freien Enden auf einer Seite der Stützstäbe (12) in einem gemeinsamen Befestigungsteil (32) aufgenommen wird, über das die Verbindung mit dem zuordenbaren Endteil (26) des Filterelementes hergestellt ist.

5. Verfahren nach einem der Ansprüche 1 bis 4, **dadurch gekennzeichnet, daß** außenumfangseitig um das Siebgitter (22) herum ein Stützteil (34), insbesondere in Form eines spiralförmigen Stützdrahtes geführt wird, das mit seinen beiden freien Enden (36) am jeweiligen Endteil (26) abgestützt wird.

6. Verfahren nach Anspruch 5, **dadurch gekennzeichnet, daß** der Stützdraht gleichsinnig zur Spaltrohrsteigung gewickelt wird.

7. Verfahren nach einem der Ansprüche 1 bis 6, **dadurch gekennzeichnet, daß** die Komponenten des Filterelementes zumindest teilweise aus Edelstahlmaterialien gebildet werden, insbesondere das Siebgitter (22).

## Claims

1. A method of manufacturing conical filter elements, in particular slotted sieve tube filter elements the respective support structure of which is formed from a plurality of support rods (12) about which, by leaving gaps (14) open through which a fluid can pass, at least one wire profile (16) is wound in individual windings, and said wire profile is at least partially securely connected to the support rods (12), the respective wire profile (16) being surrounded by a sieve screen (22) that rests at least partially against the wire profile (16) and follows to the same degree the conical extension of the filter element that is provided on the end with end portions (26), **characterised in that** the conical sieve screen (22) is formed as a one-piece portion pulled onto the support structure with the wire profile (16), that the pull-on portion is longer in form than the support structure, that the sieve screen (22) is pulled onto the support structure, that after this at least an excess (24) of the sieve screen (22) is removed so as to fit accurately, and that the sieve screen (22) on the support structure is connected to the respective end portion (26) of the filter element.

2. The method of manufacturing a filter element according to Claim 1, **characterised in that** the sieve screen (22) is obtained from a blank of flexible filter material which is bent to form a conical tube along its two longitudinal edges facing towards one another, connected to one another securely, in particular by means of a welded seam.

3. The method according to Claim 1 or 2, **characterised in that** the respective end portion (26) of the filter element is formed from an end cap which is provided on its free end with a retainer portion (28) which, after shortening the sieve screen (22), engages over the latter on its free end, and by means of an impressing or crimping process the retainer portion (28) is pressed against the outer circumference of the sieve screen (22) in the region of its free end in order to make a secure connection between the end cap and the sieve screen (22).

4. The method according to any of Claims 1 to 3, **characterised in that** the free ends of the support rods (12) are connected securely to one another directly by the respective end portion (26), preferably by means of a welding method, or that at least one portion of the free ends are accommodated on one side of the support rods (12) in a common attachment portion, by means of which the connection to the assignable end portion (26) of the filter element is established.

5. The method according to any of Claims 1 to 4, **characterised in that** a support part (34), in particular in the form of a spiral-shaped support wire, that is supported by its two free ends (36) on the respective end portion (26), is guided around the sieve screen (22) on the outer circumference side.

6. The method according to Claim 5, **characterised in that** the support wire is wound in the same direction as the slotted tube incline.

7. The method according to any of Claims 1 to 6, **characterised in that** the components of the filter element are formed at least partially of stainless steel materials, in particular the sieve screen (22).

## Revendications

1. Procédé de fabrication d'un élément filtrant conique, notamment d'un élément filtrant à tube tamis à fente, dont la structure d'appui respective est formée d'une pluralité de barreaux (12) d'appui, autour desquels est enroulé en diverses spires au moins un profilé (16) en fil en laissant libre des fentes (14), dans lesquelles un fluide peut passer et le profilé est assemblé solidement, au moins en partie, aux barreaux (12) d'appui, le profilé (16) en fil étant entouré d'une grille (22) formant tamis, qui, en s'appliquant au moins en partie au profilé (16) en fil et en suivant la courbe conique de l'élément filtrant, est munie du côté de l'extrémité de parties (26) d'extrémité, **caractérisé en ce que** la grille (22) formant tamis est formée sous la forme d'une partie de montage d'une seule pièce sur la structure d'appui ayant le profilé (16) en fil, **en ce que** la partie de montage est plus longue que la structure d'appui et **en ce que** la grille (22) formant tamis est tirée sur la structure d'appui, **en ce que** suivant cela au moins une partie (24) en dépassement de la grille (22) formant tamis est séparée à ajustement précis, **en ce que** la grille (22) formant tamis sur la structure d'appui est assemblée à la partie (26) respective d'extrémité de l'élément filtrant.

2. Procédé de fabrication d'un élément filtrant suivant la revendication 1, **caractérisé en ce que** la grille (22) formant tamis est obtenue à partir d'un flan de matériau filtrant souple en le transformant en un tube conique courbé le long de ses deux bords longitudinaux tournés l'un vers l'autre, notamment par un cordon de soudure, en les assemblant solidement l'un à l'autre.

3. Procédé de fabrication d'un élément filtrant suivant la revendication 1 ou 2, **caractérisé en ce que** la partie (26) respective d'extrémité de l'élément filtrant est formée d'un chapeau (26) d'extrémité et dotée à l'une des ses extrémités libres d'une partie (28) de réception, qui, après raccourcissement de la grille (22) formant tamis, empiète sur l'extrémité libre de celle-ci et, par une opération d'enfoncement ou de bordage, la partie (28) de réception est, pour un assemblage solide entre le chapeau d'extrémité et la grille (22) formant tamis, pressée sur le pourtour extérieur du tamis (22) formant grille dans la zone de son extrémité libre.

4. Procédé de fabrication d'un élément filtrant suivant l'une des revendications 1 à 3, **caractérisé en ce que** les extrémités libres des barreaux (12) d'appui sont assemblées solidement entre elles directement avec la partie (26) d'extrémité respective, de préférence par un procédé de soudure, ou **en ce qu'**au moins une partie des extrémités libres est reçue d'un côté des barreaux (12) d'appui dans une partie commune de fixation, par laquelle l'assemblage avec la partie (26) d'extrémité pouvant être associée de l'élément filtrant est ménagé.

5. Procédé de fabrication d'un élément filtrant suivant l'une des revendications 1 à 4, **caractérisé en ce que**, du côté du pourtour extérieur autour de la grille (22) formant tamis, est guidée une partie (34) d'appui, notamment sous la forme d'un fil d'appui en spirale, qui s'appuie sur la partie (26) d'extrémité respective par ses deux extrémités (36) libres.

6. Procédé de fabrication d'un élément filtrant suivant la revendication 5, **caractérisé en ce que** le fil d'appui est enroulé dans le même sens que le pas du tube à fente.

7. Procédé de fabrication d'un élément filtrant suivant l'une des revendications 1 à 6, **caractérisé en ce que** les éléments de l'élément filtrant sont formés au moins en partie en matériau assez fin, notamment la grille (22) formant tamis.
